# EUROPÄISCHE PATENTSCHRIFT

(11) **EP 1 356 854 B1**
(45) Veröffentlichungstag und Bekanntmachung des Hinweises auf die Patenterteilung: **31.05.2006**
(21) Anmeldenummer: 03004860.7
(22) Anmeldetag: 05.03.2003
(51) Int. Cl.: B01D 35/04, B01D 35/147, C02F 1/00

(54) **Filtervorrichtung**
Filter device
Dispositif de filtrage

(30) Priorität: 16.04.2002 DE 10216848
(43) Veröffentlichungstag der Anmeldung: 29.10.2003
(73) Patentinhaber: Water-Planet GmbH, 32425 Minden (DE)
(72) Erfinder: Zeuner, Manfred, 80805 München (DE)
(74) Vertreter: Grünecker, Kinkeldey, Stockmair & Schwanhäusser Anwaltssozietät

(56) Entgegenhaltungen:
- WO-A-89/09645
- US-A- 4 212 743
- US-A- 4 980 073
- US-A- 5 017 286
- US-A- 5 151 179

## Beschreibung

Die vorliegende Erfindung bezieht sich auf eine Filtervorrichtung mit einer Filtereinrichtung zum Filtern eines Fluidstroms und mit einem Ventil, das mittels einer Betätigungseinrichtung von einer Sperrstellung, in der ein Fluidstrom an der Filtereinrichtung vorbeileitbar ist, in eine Filterstellung überführbar ist, in der der Fluidstrom durch die Filtereinrichtung leitbar ist, wobei das Ventil durch Druckabfall im Fluidstrom von der Filterstellung in die Sperrstellung rücküberführbar ist.

Derartige Filtervorrichtungen sind z. B. aus der US 5 017 286 bekannt. Diese Druckschrift beschreibt einen Wasserfilter, der an einem Wasserhahn montiert wird. Die Filtervorrichtung weist ein Ventil auf, das von einer Sperrstellung, in der der Fluidstrom an der Filtereinrichtung vorbeileitbar ist, in eine Filterstellung überführt werden kann, in der der Fluidstrom durch die Filtereinrichtung geleitet werden kann. Das Ventil ist durch Druckabfall im Fluidstrom von der Filterstellung in die Sperrstellung rücküberführbar. Mit Hilfe eines Griffes kann das Ventil manuell von der Sperrstellung in die Filterstellung überführt werden.

Filtervorrichtungen sind auch aus der EP 0 917 900 A1 bekannt. Sie werden zur Reinigung von Fluiden, wie z.B. Wasser, verwendet. Solche Filtervorrichtungen weisen eine Filtereinrichtung auf und werden an einen Wasserhahn angeschlossen.

Außerdem weisen derartige Filtervorrichtungen ein Ventil, das durch Betätigen eines Hebels von einer Sperrstellung in eine Filterstellung überführt werden kann, und eine flexible Wasserleitungseinrichtung mit einer Wasserzuführ- und einer Wasserabführleitung zwischen Ventil und Filtereinrichtung auf.

In der Filterstellung wird das Wasser zunächst durch die Wasserzuführleitung in die Filtereinrichtung geleitet und anschließend das gefilterte Wasser durch die Wasserabführleitung zum Fluidauslass geleitet.

In der Sperrstellung wird das ungefilterte Wasser vom Wasserhahn in einen Auslass geleitet.

Aus der US 38 02 563 ist ebenfalls eine Filtervorrichtung bekannt, bei der ein Ventil mittels einer Betätigungseinrichtung von der Sperrstellung in die Filterstellung überführbar ist.

Als nachteilig bei derartigen Filtervorrichtungen erweist sich, dass das Ventil von Hand durch Betätigen des Hebels von der Filterstellung in die Sperrstellung überführt werden muss. Wenn dies nicht gemacht wird, läuft auch Wasser durch den Filter, das nicht gefiltert werden müsste. Dies führt zu einem frühzeitigen Verschleiß der Filtereinrichtung.

Aufgabe der Erfindung ist es, eine Filtervorrichtung der eingangs genannten Art zu verbessem. Dabei soll der frühzeitige Verschleiß der Filtervorrichtung aufgrund von unnötigen Filtervorgängen verhindert werden.

Die Aufgabe wird erfindungsgemäß gelöst durch eine Filtervorrichtung der eingangs genannten Art, bei der das Ventil durch eine einen Druckschalter aufweisende Betätigungseinrichtung von der Sperrstellung in die Filterstellung überführbar ist.

Diese Lösung ist einfach und hat den Vorteil, dass das Ventil beim Zudrehen des Fluidhahns oder bei Abfall des Fluiddruckes unter einen bestimmten, vom Hersteller festgelegten Wert von der Filterstellung automatisch in die Sperrstellung überführt wird. Somit wird ein unbeabsichtigtes Einleiten des Fluidstroms in die Filtereinrichtung und ein frühzeitiger Verschleiß verhindert. Weiterhin wird dadurch verhindert, dass durch Entstehen eines Unterdruckes im Fluidleitungssystem Wasser von der Filtervorrichtung in das Fluidleitungssystem zurückläuft. Dadurch, dass die Betätigungseinrichtung einen Druckschalter aufweist, ist eine leichte und bedienungsfreundliche Überführung des Ventils von der Sperrstellung in die Filterstellung möglich.

Von Vorteil kann es sein, wenn das Ventil mittels einer Vorspanneinrichtung in die Sperr stellung vorgespannt ist. Dadurch kann das Ventil mittels der Vorspanneinrichtung bei Druckabfall von der Filterstellung zuverlässig in die Sperrstellung rücküberführt werden.

Weiterhin kann es von Vorteil sein, wenn die Vorspanneinrichtung eine Federeinrichtung aufweist. Durch die Federeinrichtung kann das Ventil bei Druckabfall von der Filterstellung auf einfache Weise in die Sperrstellung überführt werden. Weiterhin ist eine Federeinrichtung kostengünstig.

Außerdem kann es von Vorteil sein, wenn die Federeinrichtung eine Druckfeder aufweist. Somit können Kosten eingespart werden, da die Druckfeder günstig in der Herstellung ist.

In einer vorteilhaften Weiterentwicklung der Erfindung kann das Ventil in ein Gehäuse der Filtervorrichtung integriert sein. Auf diese Weise ist eine kompakte Bauweise der Filtervorrichtung möglich und die Filtervorrichtung kann z.B. leicht auf Reisen mitgenommen werden.

Auch kann es sich als vorteilhaft erweisen, wenn das Ventil einen Ventilstößel aufweist. Somit kann die Konstruktion vereinfacht und kompakter gestaltet werden.

Von Vorteil kann es zudem sein, wenn der Ventilstößel durch Betätigen des Druckschalters axial verschieblich ist, da dadurch das Umschalten zwischen Sperrstellung und Filterstellung und die Konstruktion weiter vereinfacht werden kann.

Auch kann es sich als günstig erweisen, wenn der Druckschalter mit dem Ventilstößel in Axialrichtung des Druckschalters fest verbunden ist. Somit läßt sich eine bessere Führung von Druckschalter und Ventilstößel erzielen und kann das Verschieben des Ventilstößels durch Druck auf den Druckschalter weiter erleichtert werden.

Es kann auch vorteilhaft sein, wenn der Druckschalter eine Aufnahme für einen Kupplungsabschnitt des Ventilstößels aufweist. Auf diese Weise kann der Ventilstößel leicht mit dem Druckschalter verbunden werden und es entsteht eine feste Verbindung.

Es kann auch vorteilhaft sein, wenn der dem Druckschalter zugewandte Kupplungsabschnitt kugelförmig ist, wodurch die Befestigung des Kupplungsabschnitts am Druckschalter noch erleichtert wird.

Weiterhin kann es von Vorteil sein, wenn der Druckschalter zumindest einen Anschlag aufweist, der die Bewegung des Druckschalters beim Überführen des Ventils von der Sperrstellung in die Filterstellung begrenzt. Dadurch wird die Bedienung noch weiter vereinfacht. Darüber hinaus wird der Ventilstößel und die Vorspanneinrichtung vor einer zu großen Krafteinwirkung geschützt.

Von Vorteil kann es ebenfalls sein, wenn zumindest eine Dichtung den Ventilstößel ringförmig umgibt, so dass eine gute Abdichtung sichergestellt werden kann.

Auch kann es sich als vorteilhaft erweisen, wenn die Dichtung in Axialrichtung des Ventilstößels festgelegt ist. Damit kann die Abdichtung weiter verbessert werden.

Auch kann es sich als günstig erweisen, wenn die Dichtung symmetrisch in Axialrichtung ist, wodurch die Abdichtung weiter verbessert werden kann. Darüber hinaus kann die Dichtung kostengünstig hergestellt werden.

In einer vorteilhaften Weiterentwicklung der Erfindung kann der Querschnitt der Dichtung eine Dreiecksform aufweisen. Auf diese Weise können größere Dichtflächen erzielt und die Abdichtung weiter verbessert werden.

Zudem kann es sich als günstig erweisen, wenn in der Filterstellung der Fluiddruck auf den Ventilstößel einwirkt, so dass die Abdichtung weiter verbessert werden kann.

In einer vorteilhaften Weiterbildung der Erfindung kann der Fluiddruck in der Filterstellung auf die Dichtung einwirken. Auch dadurch kann die Abdichtung weiter verbessert werden.

In einer vorteilhaften Weiterbildung der Erfindung kann in der Filterstellung der Fluiddruck auf den Ventilstößel entgegen der Vorspanneinrichtung einwirken, um dadurch den Ventilstößel in der Filterstellung zu halten. Auf diese Weise wird das Ventil allein durch den Fluiddruck in der Filterstellung gehalten und ein zusätzlicher Druck auf den Druckknopf ist nicht mehr notwendig.

Auch kann es sich als günstig erweisen, wenn in der Sperrstellung der Fluiddruck auf den Ventilstößel einwirkt. Dies kann ebenfalls zu einer weiter verbesserten Abdichtung führen.

Zudem kann es sich als günstig erweisen, wenn der Fluiddruck in der Sperrstellung auf die Dichtung einwirkt, da dadurch der Druck auf die Dichtung erhöht und somit die Abdichtung weiter verbessert werden kann.

In einer vorteilhaften Weiterbildung der Erfindung kann in der Sperrstellung der Fluiddruck auf den Ventilstößel in Richtung der Vorspanneinrichtung einwirken, um dadurch den Ventilstößel zusätzlich in der Sperrstellung zu halten. Dadurch kann ein unbeabsichtigtes Filtern von Wasser und ein frühzeitiger Verschleiß der Filtervorrichtung zusätzlich wirkungsvoll verhindert werden.

Auch kann es sich als günstig erweisen, wenn das Ventil einen Fluidkanal, einen Fluideinlaß und einen Fluidauslaß aufweist. Somit ist eine kompakte Bauweise der Filtervorrichtung möglich.

Von Vorteil kann es zudem sein, wenn der Fluidkanal zumindest abschnittsweise bogenförmig verläuft, da dadurch die Bauweise noch kompakter gestaltet werden kann.

Zudem kann es sich als günstig erweisen, wenn der Fluideinlaß und der Fluidauslaß benachbart angeordnet sind, um dadurch die Kompaktheit der Filtervorrichtung weiter zu erhöhen.

In einer vorteilhaften Weiterbildung der Erfindung kann im eingebauten Zustand die Achse des Ventilstößels horizontal verlaufen. Auf diese Weise muss die Federkraft die Schwerkraft nicht überwinden. Weiterhin kann der Druckschalter günstig angeordnet werden und somit eine kompakte Bauweise gewährleistet werden. Darüber hinaus ist eine leichte Bedienung der Filtervorrichtung möglich.

Auch kann es sich als günstig erweisen, wenn der Fluideinlaß oberhalb des Fluidauslasses angeordnet ist, wodurch die Filtervorrichtung noch kompakter wird.

Von Vorteil kann es zudem sein, wenn der Fluidauslaß in einen Perlator mündet. Dadurch ist eine Beeinflussung des Fluidstroms möglich. Außerdem kann Wasser eingespart werden.

Vorteilhafte Weiterentwicklungen sind Gegenstand der jeweiligen Unteransprüche.

Die Erfindung wird nachstehend anhand eines Ausführungsbeispiels und zugehöriger Zeichnungen näher erläutert.

Diese zeigen:
- Fig. 1: eine schematische Darstellung der Filtervorrichtung in einer Seitenansicht,
- Fig. 2: die Filtervorrichtung aus Fig. 1 in einer Draufsicht,
- Fig. 3: eine Schnittansicht der Filtervorrichtung aus Fig. 1 entlang der Linie III-III aus Fig. 2,
- Fig. 4: eine Schnittansicht der Filtervorrichtung aus Fig. 1 entlang der Linie IV-IV aus Fig. 2 in der Sperrstellung des Ventils,
- Fig. 5: eine Schnittansicht der Filtervorrichtung aus Fig. 1 entlang der Linie IV-IV aus Fig. 2 in der Filterstellung des Ventils, und
- Fig. 6: eine Schnittansicht der Filtervorrichtung aus Fig. 1 entlang der Linie VI-VI aus Fig. 2.

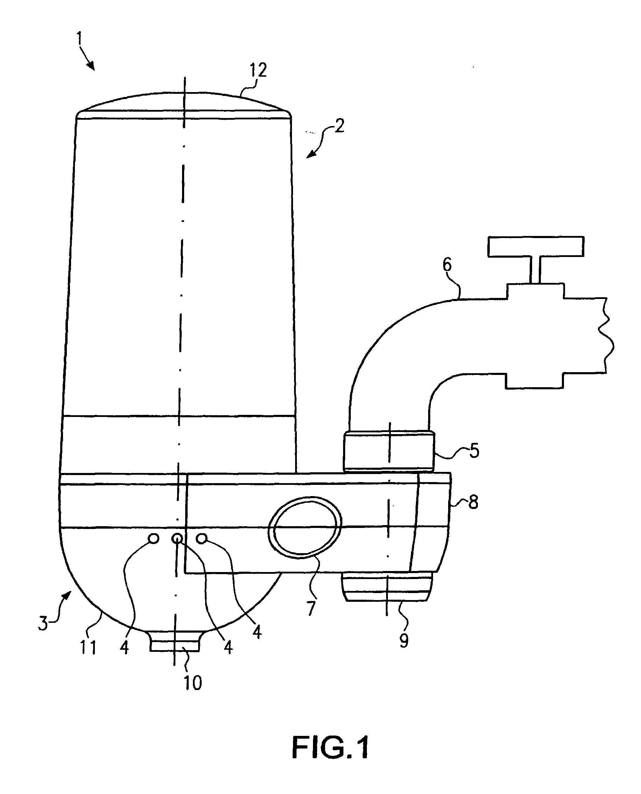

Eine Filtervorrichtung 1 zur Reinigung von Fluiden, wie z.B: Wasser, wird anhand von Fig. 1 näher erläutert.

Die Filtervorrichtung 1 weist eine austauschbare Filtereinrichtung 2 und ein Gehäuse 3 auf. Am Gehäuse 3 sind drei LEDs 4 zur Anzeige des Zustands der Filtereinrichtung 2 angebracht.

Die Filtervorrichtung 1 wird mittels einer Anschlusseinrichtung 5 an einen Wasserhahn 6 angeschlossen. Durch Betätigen einer Betätigungseinrichtung 7 wird ein Ventil 8 betätigt. Das Wasser fließt entweder ungefiltert durch eine Fluidaustrittsöffnung 9 oder wird in die Filtereinrichtung 2 geleitet. Nach Durchlaufen der Filtervorrichtung 1 tritt das Wasser durch eine Filterfluidaustrittsöffnung 10 an der Filtervorrichtungsunterseite 11 wieder aus.

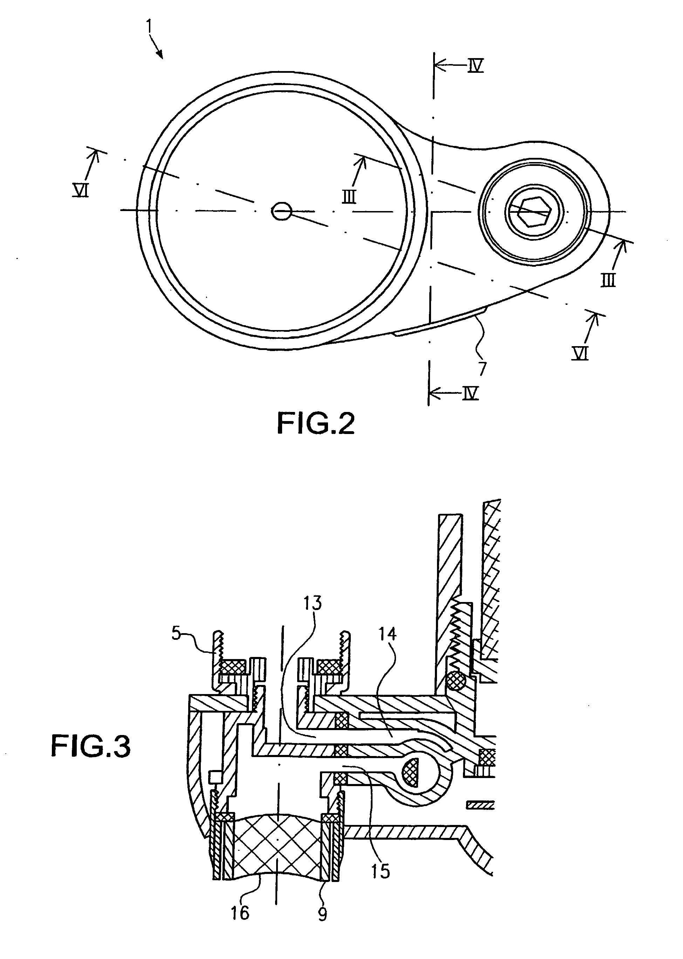

Anhand von Fig. 3 kann der Fluidfluss nach Durchfließen der Anschlußeinrichtung 5 näher erläutert werden.

In Fig. 3 ist ein Fluideinlaß 13 dargestellt, der zunächst in einen zumindest abschnittsweise bogenförmig verlaufenden Fluidkanal 14, dann in einen Fluidauslaß 15 und schließlich in einen Perlator 16 mündet.

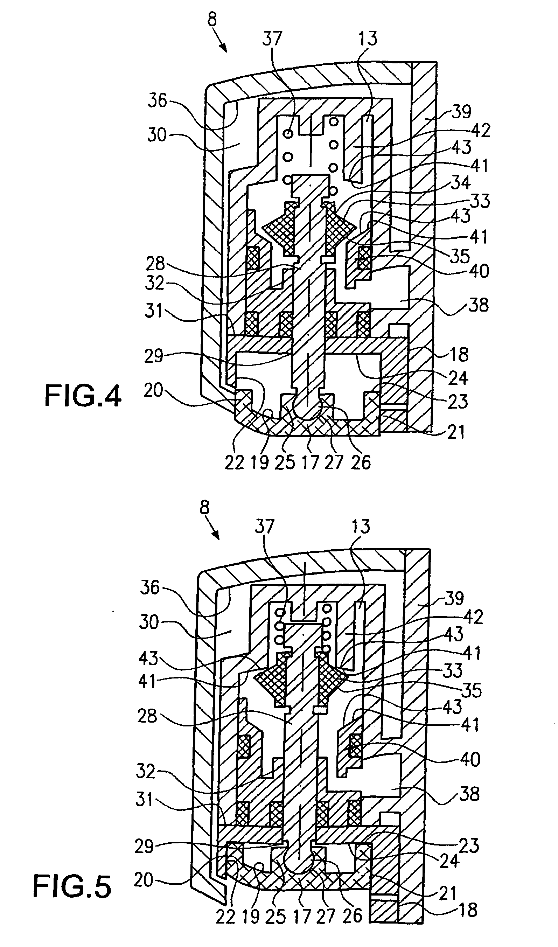

Anhand von Fig. 4 wird die Sperrstellung und anhand von Fig. 5 die Filterstellung des Ventils 8 näher erläutert.

Das Ventil 8 weist eine Betätigungseinrichtung 7 mit einem Druckschalter 17 auf. Der Druckschalter 17 ist in einem Druckschaltergehäuse 18 angeordnet. An der Druckschalterinnenseite 19 ist ein Anschlag 20 angeordnet, dessen Außenseite 21 an einer Druckschaltergehäuseinnenseite 22 entlanggleiten kann. Bei gedrücktem Druckschalter 17 stößt die Anschlagsfläche 23 an der Stirnfläche 24 des Druckschaltergehäuses 18 an. Weiterhin ist an der Druckschalterinnenseite 19 eine Aufnahme 25 für einen kugelförmigen Kupplungsabschnitt 26 an der dem Druckschalter 17 zugewandten Seite 27 eines Ventilstößels 28 angeordnet. Der Ventilstößel 28 wird durch eine Öffnung 29 im Druckschaltergehäuse 18 in einen Ventilinnenraum 30 geführt. An einer Ventilinnenraumseite 31 des Ventilinnenraums 30 sind Führungen 32 für den Ventilstößel 28 angeordnet.

Der Ventilstößel 28 wird von einer ringförmigen im Querschnitt im wesentlichen dreieckförmigen Dichtung 33 mit einer dem Fluideinlass 13 zugewandten Seite 34 und einer dem Druckschalter 17 zugewandten Seite 35 umgeben. Außerdem weist das Ventil 8 an der dem Druckschalter 17 entgegengesetzten Seite 36 eine Vorspanneinrichtung 37, die eine Druckfeder 37 aufweist, auf. An dieser Seite 36 sind auch der Fluideinlaß 13 und der Fluidauslaß 15 angeordnet. Der Fluidauslaß 15 ist in dieser Schnittansicht nicht sichtbar.

Darüber hinaus weist das Ventil 8 noch einen Filterzulauf 38 auf, der an der der Filtereinrichtung 2 zugewandten Seite 39 des Ventils 8 angeordnet ist.

Um eine gute Abdichtung zu gewährleisten, sind im Ventil 8 eine Filterzulauftrennwand 40 und eine Fluideinlasstrennwand 42 angeordnet, die an der der Dichtung zugewandten Seite 43 eine abgeschrägte Dichtfläche 41 aufweisen.

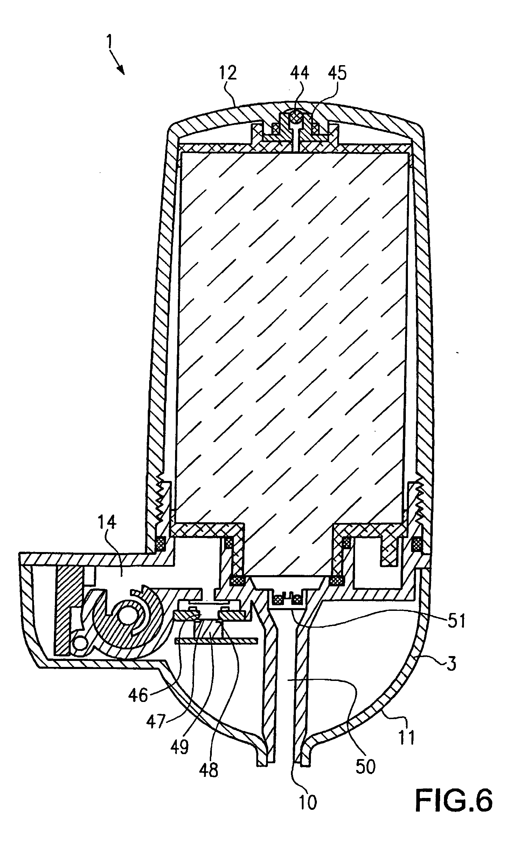

Anhand von Fig. 6 kann der Wasserstrom in der Filtervorrichtung 1 näher erläutert werden.

An der Filtervorrichtungsoberseite 12 sind eine Kugel 44 und ein Kugelhalter 45 angeordnet, die ein Entlüftungsventil bilden.

Außerdem ist in Fig. 6 eine Dichtungseinrichtung 46 mit einem Stößelabschnitt 47 dargestellt, der mit einer Stößelfläche 48 einen Schalter 49 betätigen kann.

Wie aus Fig. 6 ersichtlich ist, weist die Filtervorrichtung 1 einen Fluidaustrittskanal 50 mit einem Filterperlator 51 auf.

Nachfolgend wird die Wirkungs- und Funktionsweise der Erfindung näher erläutert.

Zunächst wird die Filtervorrichtung 1 mittels der Anschlußvorrichtung 5 am Wasserhahn 6 befestigt.

Nach Öffnen des Wasserhahns 6 fließt der Wasserstrom in das Ventil 8. Durch den Fluideinlaß 13 gelangt der Wasserstrom in den zumindest teilweise gebogenen Fluidkanal 14.

Da im allgemeinen Wasser, das längere Zeit in Leitungen steht, durch Ablagerungen in den Leitungen verunreinigt ist, soll zunächst eine bestimmte Menge Wasser ungefiltert an der Filtereinrichtung 2 vorbeigeleitet werden. Deshalb wird der Druckschalter 17 zunächst nicht betätigt.

Durch die Vorspannung der Druckfeder 37 an der dem Druckschalter 17 entgegengesetzten Seite 36 wird der Ventilstößel 28 in der Sperrstellung gehalten.

Dabei wird durch die Vorspannung der Druckfeder 37 die am Ventilstößel 28 angebrachte dreieckförmige Dichtung 33 mit der dem Druckschalter 17 zugewandten Seite 35 an die abgeschrägte und der Dichtung 33 angepaßte Dichtfläche 41, an die der Dichtung 33 zugewandten Seite 43 der Filterzulauftrennwand 40 gedrückt. Dadurch wird der Filterzulauf 38 gesperrt.

Der durch den Fluideinlaß 13 in den Fluidkanal 14 einströmende Wasserstrom drückt auf den Ventilstößel 28 und auf die dem Fluideinlaß 13 zugewandte Seite 34 der Dichtung 33 in Richtung der Druckfeder 37. Dadurch wird der Ventilstößel 28 in Sperrstellung gehalten und die Abdichtung noch erhöht.

Da der Wasserstrom nicht durch den Filterzulauf 38 in die Filtereinrichtung 2 fließen kann, fließt er durch den teilweise gebogenen Fluidkanal 14 in den Fluidauslaß 15, der in den Perlator 16 mündet, der in der Fluidaustrittsöffnung 9 angebracht ist.

Dadurch, dass sich der Fluideinlass 13 oberhalb des Fluidauslasses 15 befindet, ist eine kompakte Bauweise der Filtervorrichtung 1 möglich.

Nachdem das durch Ablagerungen in den Leitungen verunreinigte Wasser durch die Fluidaustrittsöffnung 9 die Filtervorrichtung 1 verlassen hat, soll nun das Wasser durch Einleiten in die Filtereinrichtung 2 gefiltert werden.

Dazu wird bei geöffnetem Wasserhahn 6 der Druckschalter 17 betätigt, um das Ventil 8 von der Sperrstellung in die Filterstellung zu überführen.

Der Druckschalter 17 ist im Druckschaltergehäuse 18 angeordnet. Durch den Anschlag 20 an der Druckschalterinnenseite 19 wird die Bewegung des Druckschalters 17 beim Überführen des Ventils 8 von der Sperrstellung in die Filterstellung begrenzt. Der Druckschalter 17 kann soweit eingedrückt werden, bis die Anschlagsfläche 23 an der Stirnfläche 24 des Schaltergehäuses 18 ansteht.

Weiterhin wird die Anschlagsaußenseite 21 an der Druckschaltergehäuseinnenseite 22 entlanggeführt. Dadurch ist eine sichere Bedienung des Druckschalters 17 möglich, und es wird einer zu großen Krafteinwirkung auf die Druckfeder 37 vorgebeugt.

Der Druckschalter 17 ist mit dem Ventilstößel 28 in Axialrichtung des Druckschalters 17 fest verbunden. Dadurch ist der Ventilstößel 28 durch Betätigen des Druckschalters 17 axial verschieblich. Deshalb ist eine leichte Betätigung des Ventils 8 möglich.

Der Druckschalter 17 weist an der Druckschalterinnenseite 19 die Aufnahme 25 für den Kupplungsabschnitt 26 auf. Dadurch, dass der Kupplungsabschnitt 26 an der dem Druckschalter 17 zugewandten Seite 27 kugelförmig ist, ist eine leichte und feste Verbindung zwischen Aufnahme 25 und Kupplungsabschnitt 26 möglich.

Durch Drücken des Druckschalters 17 wird der Ventilstößel 28 durch die Öffnung 29 an der Stirnfläche 24 des Druckschaltergehäuses 18 axial in den Ventilinnenraum 30 geschoben.

An der Ventilinnenraumseite 31 sind Führungen 32 für den Ventilstößel 28 angebracht, um ein Verkanten des Ventilstößels 28 zu verhindern.

Der Ventilstößel 28 weist eine Dichtung 33 auf, die den Ventilstößel 28 ringförmig umgibt, in Axialrichtung des Ventilstößels festgelegt und symmetrisch in Axialrichtung ist.

Durch Betätigen des Druckschalters 17 wird eine Kraft auf die Druckfeder 37 ausgeübt. Dadurch, dass das Ventil mittels der Druckfeder 37 in die Sperrstellung vorgespannt ist, wird in der Filterstellung die Druckfeder 37 zusammengedrückt.

Weiterhin wird die dem Fluideinlaß 13 zugewandte Seite 34 der Dichtung 33 an die Dichtfläche 41 der der Dichtung 33 zugewandten Seite 43 der Fluideinlasstrennwand 42 gedrückt.

Auch der Wasserdruck des durch den Fluideinlaß 13 in den Fluidkanal 14 strömenden Wasserstroms drückt auf den Ventilstößel 28 und auf die dem Druckschalter 17 zugewandte Seite 35 der Dichtung 33 entgegen der Druckfeder 37, wodurch die Abdichtung noch verbessert wird.

Allein durch den Wasserdruck wird der Ventilstößel 28 in der Filterstellung gehalten. Ein zusätzlicher Druck auf den Druckknopf 17 ist nicht mehr nötig.

Der Wasserstrom kann nun durch den Filterzulauf 38 an dem der Filtereinrichtung 2 zugewandten Seite 39 an der Dichtungseinrichtung 46 mit dem Stößelabschnitt 47, dessen Stößelfläche 48 auf den Schalter 49 drückt, mit dem eine elektronische Steuerungseinrichtung betätigt wird, vorbei in die Filtereinrichtung 2 fließen. Die Steuerungseinrichtung steuert eine Warneinrichtung mit LEDs 4 am Gehäuse 3, die den Zustand der Filtereinrichtung 2 angeben.

Die Filtervorrichtungsoberseite 12 weist eine Belüftungseinrichtung mit der Kugel 44 und dem Kugelhalter 45 auf, um einen besseren Wasserfluss in der Filtereinrichtung zu gewährleisten.

Nach dem Durchlaufen der Filtereinrichtung 2 strömt das Wasser am Filterperlator 51 vorbei in den Fluidaustrittskanal 50 und verlässt die Filtervorrichtung 1 über die Filterfluidaustrittsöffnung 10 an der Filtervorrichtungsunterseite 11.

Nachdem die gewünschte Menge Wasser gefiltert wurde, wird der Wasserhahn 6 zugedreht. Dadurch lässt der Wasserdruck nach bzw. es ist kein Wasserdruck mehr vorhanden.

Somit wirkt der Wasserdruck nicht mehr auf das Ventil 8 entgegen der Druckfeder 37.

Durch den Druckabfall im Wasserstrom wird das Ventil 8 von der Filterstellung automatisch in die Sperrstellung rücküberführt. Dadurch wird verhindert, dass durch Entstehen eines Unterdruckes im Fluidleitungssystem Wasser von der Filtervorrichtung in das Fluidleitungssystem zurückläuft.

Bei erneutem Öffnen des Wasserhahns 6 verbleibt das Ventil 8 solange in der Filterstellung, bis der Druckschalter 17 betätigt wird.

Ab einem bestimmten Wasserdruck, der durch die Druckfeder 37 festgelegt ist, verbleibt das Ventil 8 in der Filterstellung, ohne dass der Druckschalter 17 betätigt wird.

Dadurch, dass im eingebauten Zustand die Achse des Ventilstößels 28 horizontal verläuft, ist eine leichte Bedienung der Filtervorrichtung 1 und eine kompakte Bauweise möglich.

Durch die Rücküberführung des Ventils 8 von der Filterstellung in die Sperrstellung bei Druckabfall im Wasserstrom kann eine unnötige Abnutzung der Filtereinrichtung 1 verhindert werden.

Durch die kompakte Bauweise kann die Filtervorrichtung 1 leicht transportiert werden und ist somit ideal für die Reise.

## Patentansprüche

1. Filtervorrichtung mit einer Filtereinrichtung (2) zum Filtern eines Fluidstroms und mit einem Ventil (8), das von einer Sperrstellung, in der ein Fluidstrom an der Filtereinrichtung (2) vorbeileitbar ist, in eine Filterstellung überführbar ist, in der der Fluidstrom durch die Filtereinrichtung (2) leitbar ist, wobei das Ventil (8) durch Druckabfall im Fluidstrom von der Filterstellung in die Sperrstellung rücküberführbar ist, **dadurch gekennzeichnet, dass** das Ventil (8) durch eine einen Druckschalter (17) aufweisende Betätigungseinrichtung (7) von der Sperrstellung in die Filterstellung überführbar ist.

2. Filtervorrichtung nach Anspruch 1, **dadurch gekennzeichnet, dass** das Ventil (8) mittels einer Vorspanneinrichtung (37) in die Sperrstellung vorgespannt ist.

3. Filtervorrichtung nach zumindest einem der vorhergehenden Ansprüche, **dadurch gekennzeichnet, dass** die Vorspanneinrichtung (37) eine Federeinrichtung (37) aufweist.

4. Filtervorrichtung nach zumindest einem der vorhergehenden Ansprüche, **dadurch gekennzeichnet, dass** die Federeinrichtung (37) eine Druckfeder (37) aufweist.

5. Filtervorrichtung nach zumindest einem der vorhergehenden Ansprüche, **dadurch gekennzeichnet, dass** das Ventil (8) in ein Gehäuse (3) der Filtervorrichtung (1) integriert ist.

6. Filtervorrichtung nach zumindest einem der vorhergehenden Ansprüche, **dadurch gekennzeichnet, dass** das Ventil (8) einen Ventilstößel (28) aufweist.

7. Filtervorrichtung nach zumindest einem der vorhergehenden Ansprüche, **dadurch gekennzeichnet, dass** der Ventilstößel (28) durch Betätigen des Druckschalters (17) axial verschieblich ist.

8. Filtervorrichtung nach zumindest einem der vorhergehenden Ansprüche, **dadurch gekennzeichnet, dass** der Druckschalter (17) mit dem Ventilstößel (28) in Axialrichtung des Druckschalters (17) fest verbunden ist.

9. Filtervorrichtung nach zumindest einem der vorhergehenden Ansprüche, **dadurch gekennzeichnet, dass** der Druckschalter (17) eine Aufnahme (25) für einen Kupplungsabschnitt (26) des Ventilstößels (28) aufweist.

10. Filtervorrichtung nach zumindest einem der vorhergehenden Ansprüche, **dadurch gekennzeichnet, dass** der dem Druckschalter (17) zugewandte Kupplungsabschnitt (26) kugelförmig ist.

11. Filtervorrichtung nach zumindest einem der vorhergehenden Ansprüche, **dadurch gekennzeichnet, dass** der Druckschalter (17) zumindest einen Anschlag (20) aufweist, der die Bewegung des Druckschalters (17) beim Überführen des Ventils (8) von der Sperrstellung in die Filterstellung begrenzt.

12. Filtervorrichtung nach zumindest einem der vorhergehenden Ansprüche, **dadurch gekennzeichnet, dass** zumindest eine Dichtung (33) den Ventilstößel (28) ringförmig umgibt.

13. Filtervorrichtung nach zumindest einem der vorhergehenden Ansprüche, **dadurch gekennzeichnet, dass** die Dichtung (33) in Axialrichtung des Ventilstößels (28) festgelegt ist.

14. Filtervorrichtung nach zumindest einem der vorhergehenden Ansprüche, **dadurch gekennzeichnet, dass** die Dichtung (33) symmetrisch in Axialrichtung ist.

15. Filtervorrichtung nach zumindest einem der vorhergehenden Ansprüche, **dadurch gekennzeichnet, dass** der Querschnitt der Dichtung (33) eine Dreiecksform aufweist.

16. Filtervorrichtung nach zumindest einem der vorhergehenden Ansprüche, **dadurch gekennzeichnet, dass** in der Filterstellung der Fluiddruck auf den Ventilstößel (28) einwirkt.

17. Filtervorrichtung nach zumindest einem der vorhergehenden Ansprüche, **dadurch gekennzeichnet, dass** der Fluiddruck in der Filterstellung auf die Dichtung (33) einwirkt.

18. Filtervorrichtung nach zumindest einem der vorhergehenden Ansprüche, **dadurch gekennzeichnet, dass** in der Filterstellung der Fluiddruck auf den Ventilstößel (28) entgegen der Vorspanneinrichtung (37) einwirkt, um **dadurch** den Ventilstößel (28) in der Filterstellung zu halten.

19. Filtervorrichtung nach zumindest einem der vorhergehenden Ansprüche, **dadurch gekennzeichnet, dass** in der Sperrstellung der Fluiddruck auf den Ventilstößel (28) einwirkt.

20. Filtervorrichtung nach zumindest einem der vorhergehenden Ansprüche, **dadurch gekennzeichnet, dass** der Fluiddruck in der Sperrstellung auf die Dichtung (33) einwirkt.

21. Filtervorrichtung nach zumindest einem der vorhergehenden Ansprüche, **dadurch gekennzeichnet, dass** in der Sperrstellung der Fluiddruck auf den Ventilstößel (28) in Richtung der Vorspanneinrichtung (37) einwirkt, um **dadurch** den Ventilstößel (28) in der Sperrstellung zu halten.

22. Filtervorrichtung nach zumindest einem der vorhergehenden Ansprüche, **dadurch gekennzeichnet, dass** das Ventil (8) einen Fluidkanal (14), einen Fluideinlass (13) und einen Fluidauslass (15) aufweist.

23. Filtervorrichtung nach zumindest einem der vorhergehenden Ansprüche, **dadurch gekennzeichnet, dass** der Fluidkanal (14) zumindest abschnittsweise bogenförmig verläuft.

24. Filtervorrichtung nach zumindest einem der vorhergehenden Ansprüche, **dadurch gekennzeichnet, dass** Fluideinlass (13) und Fluidauslass (15) benachbart angeordnet sind.

25. Filtervorrichtung nach zumindest einem der vorhergehenden Ansprüche, **dadurch gekennzeichnet, dass** im eingebauten Zustand die Achse des Ventilstößels (28) horizontal verläuft.

26. Filtervorrichtung nach zumindest einem der vorhergehenden Ansprüche, **dadurch gekennzeichnet, dass** der Fluideinlass (13) oberhalb des Fluidauslasses (15) angeordnet ist.

27. Filtervorrichtung nach zumindest einem der vorhergehenden Ansprüche, **dadurch gekennzeichnet, dass** der Fluidauslass (15) in einen Perlator (16) mündet.

## Claims

1. Filter system with a filter unit (2) for filtering a fluid flow and incorporating a valve (8) which can be switched from a shut-off position in which a fluid flow is able to bypass the filter unit (2) into a filter position in which the fluid flow can be directed through the filter unit (2), which valve (8) can be switched back from the filter position into the shut-off position by a pressure drop in the fluid flow, **characterised in that** the valve (8) can be switched from the shut-off position into the filter position by means of an actuating device (7) incorporating a pressure switch (17).

2. Filter system as claimed in claim 1, **characterised in that** the valve (8) is biased into the shut-off position by means of a biasing mechanism (37).

3. Filter system as claimed in at least one of the preceding claims, **characterised in that** the biasing mechanism (37) has a spring mechanism (37),

4. Filter system as claimed in at least one of the preceding claims, **characterised in that** the spring mechanism (37) has a compression spring (37).

5. Filter system as claimed in at least one of the preceding claims, **characterised in that** the valve (8) is integrated in a housing (3) of the filter system (1).

6. Filter system as claimed in at least one of the preceding claims, **characterised in that** the valve (8) has a valve stem (28).

7. Filter system as claimed in at least one of the preceding claims, **characterised in that** the valve stem (28) is axially slidable when the pressure switch (17) is activated.

8. Filter system as claimed in at least one of the preceding claims, **characterised in that** the pressure switch (17) is fixedly connected to the valve stem (28) in the axial direction of the pressure switch (17).

9. Filter system as claimed in at least one of the preceding claims, **characterised in that** the pressure switch (17) has a mount (25) for a coupling portion (26) of the valve stem (28).

10. Filter system as claimed in at least one of the preceding claims, **characterised in that** the coupling portion (26) directed towards the pressure switch (17) is spherical.

11. Filter system as claimed in at least one of the preceding claims, **characterised in that** the pressure switch (17) has at least one stop (20) which restricts the movement of the pressure switch (17) as the valve (8) is switched from the shut-off position into the filter position.

12. Filter system as claimed in at least one of the preceding claims, **characterised in that** at least one seal (33) surrounds the valve stem (28) in an annular arrangement.

13. Filter system as claimed in at least one of the preceding claims, **characterised in that** the seal (33) is fixed in the axial direction of the valve stem (28).

14. Filter system as claimed in at least one of the preceding claims, **characterised in that** the seal (33) is symmetrical in the axial direction.

15. Filter system as claimed in at least one of the preceding claims, **characterised in that** the cross-section of-the seal (33) is triangular in shape.

16. Filter system as claimed in at least one of the preceding claims, **characterised in that** the fluid pressure acts on the valve stem (28) in the filter position.

17. Filter system as claimed in at least one of the preceding claims, **characterised in that** the fluid pressure acts on the seal (33) in the filter position.

18. Filter system as claimed in at least one of the preceding claims, **characterised in that** the fluid pressure on the valve stem (28) opposes the biasing mechanism (37) in the filter position, thereby holding the valve stem (28) in the filter position.

19. Filter system as claimed in at least one of the preceding claims, **characterised in that** the fluid pressure acts on the valve stem (28) in the shut-off position.

20. Filter system as claimed in at least one of the preceding claims, **characterised in that** the fluid pressure acts on the seal (33) in the shut-off position.

21. Filter system as claimed in at least one of the preceding claims, **characterised in that** the fluid pressure acts on the valve stem (28) in the direction of the biasing mechanism (37) in the shut-off position, thereby holding the valve stem (28) in the shut-off position.

22. Filter system as claimed in at least one of the preceding claims, **characterised in that** the valve (8) has a fluid passage (14), a fluid inlet (13) and a fluid outlet (15).

23. Filter system as claimed in at least one of the preceding claims, **characterised in that** at least portions of the fluid passage (14) are arcuate in shape.

24. Filter system as claimed in at least one of the preceding claims, **characterised in that** the fluid inlet (13) and fluid outlet (15) are disposed adjacently.

25. Filter system as claimed in at least one of the preceding claims, **characterised in that** the axis of the valve stem (28) extends horizontally in the fitted state.

26. Filter system as claimed in at least one of the preceding claims, **characterised in that** the fluid inlet (13) is disposed above the fluid outlet (15).

27. Filter system as claimed in at least one of the preceding claims, **characterised in that** the fluid outlet (15) opens into a flow regulator (16).

## Revendications

1. Dispositif de filtrage avec un élément de filtrage (2) pour filtrer un courant de fluide, et une soupape (8) qui est apte à passer d'une position fermée dans laquelle un courant de fluide peut passer devant l'élément de filtrage (2), à une position de filtrage dans laquelle le courant de fluide peut traverser l'élément de filtrage (2), la soupape (8) pouvant être ramenée de la position de filtrage à la position fermée grâce à la baisse de pression dans le courant de fluide, **caractérisé en ce que** la soupape (8) est apte à passer de la position fermée à la position de filtrage grâce à un dispositif d'actionnement (7) comportant un poussoir (17).

2. Dispositif de filtrage selon la revendication 1, **caractérisé en ce que** la soupape (8) est contrainte dans la position fermée grâce à un dispositif de contrainte (37).

3. Dispositif de filtrage selon l'une au moins des revendications précédentes, **caractérisé en ce que** le dispositif de contrainte (37) comporte un dispositif à ressort (37).

4. Dispositif de filtrage selon l'une au moins des revendications précédentes, **caractérisé en ce que** le dispositif à ressort (37) comporte un ressort de compression (37).

5. Dispositif de filtrage selon l'une au moins des revendications précédentes, **caractérisé en ce que** la soupape (8) est intégrée dans une enveloppe (3) du dispositif de filtrage (1).

6. Dispositif de filtrage selon l'une au moins des revendications précédentes, **caractérisé en ce que** la soupape (8) comporte un poussoir de soupape (28).

7. Dispositif de filtrage selon l'une au moins des revendications précédentes, **caractérisé en ce que** le poussoir de soupape (28) est mobile axialement grâce à l'actionnement du poussoir (17).

8. Dispositif de filtrage selon l'une au moins des revendications précédentes, **caractérisé en ce que** le poussoir (17) est solidaire, dans son sens axial, du poussoir de soupape (28).

9. Dispositif de filtrage selon l'une au moins des revendications précédentes, **caractérisé en ce que** le poussoir (17) présente un logement (25) pour une section d'accouplement (26) du poussoir de soupape (28).

10. Dispositif de filtrage selon l'une au moins des revendications précédentes, **caractérisé en ce que** la section d'accouplement (26) tournée vers le poussoir (17) est sphérique.

11. Dispositif de filtrage selon l'une au moins des revendications précédentes, **caractérisé en ce que** le poussoir (17) comporte au moins une butée (20) qui limite son déplacement lorsque la soupape (8) passe de la position fermée à la position de filtrage.

12. Dispositif de filtrage selon l'une au moins des revendications précédentes, **caractérisé en ce qu'**au moins un joint d'étanchéité (33) entoure suivant une forme annulaire le poussoir de soupape (28).

13. Dispositif de filtrage selon l'une au moins des revendications précédentes, **caractérisé en ce que** le joint d'étanchéité (33) est bloqué dans le sens axial du poussoir de soupape (28).

14. Dispositif de filtrage selon l'une au moins des revendications précédentes, **caractérisé en ce que** le joint d'étanchéité (33) est symétrique dans le sens axial.

15. Dispositif de filtrage selon l'une au moins des revendications précédentes, **caractérisé en ce que** la section transversale du joint d'étanchéité (33) a une forme triangulaire.

16. Dispositif de filtrage selon l'une au moins des revendications précédentes, **caractérisé en ce que** dans la position de filtrage, la pression du fluide agit sur le poussoir de soupape (28).

17. Dispositif de filtrage selon l'une au moins des revendications précédentes, **caractérisé en ce que** dans la position de filtrage, la pression du fluide agit sur le joint d'étanchéité (33).

18. Dispositif de filtrage selon l'une au moins des revendications précédentes, **caractérisé en ce que** dans la position de filtrage, la pression du fluide agit sur le poussoir de soupape (28) à l'encontre du dispositif de contrainte (37), pour maintenir ainsi le poussoir de soupape (28) en position de filtrage.

19. Dispositif de filtrage selon l'une au moins des revendications précédentes, **caractérisé en ce que** dans la position fermée, la pression du fluide agit sur le poussoir de soupape (28).

20. Dispositif de filtrage selon l'une au moins des revendications précédentes, **caractérisé en ce que** dans la position fermée, la pression du fluide agit sur le joint d'étanchéité (33).

21. Dispositif de filtrage selon l'une au moins des revendications précédentes, **caractérisé en ce que** dans la position fermée, la pression du fluide agit sur le poussoir de soupape (28) dans le sens du dispositif de contrainte (37), pour maintenir ainsi le poussoir de soupape (28) en position fermée.

22. Dispositif de filtrage selon l'une au moins des revendications précédentes, **caractérisé en ce que** la soupape (8) comporte un conduit de fluide (14), une admission de fluide (13) et une sortie de fluide (15).

23. Dispositif de filtrage selon l'une au moins des revendications précédentes, **caractérisé en ce que** le conduit de fluide (14), au moins dans certaines parties, a une forme courbe.

24. Dispositif de filtrage selon l'une au moins des revendications précédentes, **caractérisé en ce que** l'admission de fluide (13) et la sortie de fluide (15) sont voisines.

25. Dispositif de filtrage selon l'une au moins des revendications précédentes, **caractérisé en ce que** dans la position de montage, l'axe du poussoir de soupape (28) est horizontal.

26. Dispositif de filtrage selon l'une au moins des revendications précédentes, **caractérisé en ce que** l'admission de fluide (13) est disposée au-dessus de la sortie de fluide (15).

27. Dispositif de filtrage selon l'une au moins des revendications précédentes, **caractérisé en ce que** la sortie de fluide (15) débouche dans un régulateur de jet (16).
